# EUROPEAN PATENT APPLICATION

(11) **EP 4 119 375 A1**
(43) Date of publication of application: **18.01.2023**
(21) Application number: 21186241.2
(22) Date of filing: 16.07.2021
(51) Int. Cl.: B60K 1/04

(54) **STRUCTURAL BATTERY WITH REDUCED SILL HEIGHT**

(71) Applicant: Volvo Car Corporation, 40531 Göteborg (SE)
(72) Inventor: Karlsson, Daniel, 412 65 Göteborg (SE); Persson, Klas, 442 35 Kungälv (SE); Hjälm Wallborg, Martin, 442 74 Harestad (SE); Forssell, Jonas, 423 63 Torslanda (SE); Olofsson, Ingvar, 475 50 Hälsö (SE); Kumaraswamy, Siddharth, 416 58 Göteborg (SE); Karlsson, Thomas, 475 41 Honoe (SE)
(74) Representative: Maiwald GmbH

(57) **Abstract**

An electric vehicle comprises:
- a frame (1) with two spaced-apart longitudinal members (6,7) having an upper transversely oriented wall member (46) that is situated a vertical distance Hu from a bottom plane (42) and a lower transversely oriented wall member (48) that is situated near the bottom plane (42), and
- a battery pack (9) with an array of battery cells (22,23) defining an array top surface (30), an array bottom surface (31) and an array side surface (32). A casing top plate (10) contacts the array top surface (30), a casing bottom plate (20) contacting the array bottom surface (31) and a casing side wall (21), connected to the top and bottom plates (10,20) and contacting the array side surface (32). The casing top plate (10) is situated a vertical distance Hct from the bottom plane (42) that substantially corresponds with the distance Hu. The battery pack (9) comprises a longitudinal impact absorption structure (40) comprising the casing side wall (21) and a reinforcement section (41,51) that extends outwardly from the side wall (21) to a position near the adjacent longitudinal member (7) and having a lower part (51), connected to the longitudinal member (7) at a height near the lower wall member (50), and an upper part (41), connected to the longitudinal member (7) near the upper wall member (45,46).

## Description

### Technical Field

The disclosure relates to an electric vehicle comprising:
- a frame with two spaced-apart longitudinal members having an upper transversely oriented wall member that is situated a vertical distance Hu from a bottom plane and a lower transversely oriented wall member that is situated at or near the bottom plane, and
- a battery pack with an array of battery cells is contained in a casing comprising a top, a bottom plate and a casing side wall connected to the top and bottom plates and contacting the array peripheral surface, the casing being connected to the longitudinal members.

The disclosure also relates to a battery pack for use in an electric vehicle.

### Background Art

Electrical vehicles (also known as Battery Electric Vehicle, BEV in short) uses a battery pack to provide electricity to the drive train/motor(s). To provide enough range with current cell technology, in line with customer expectations coming from a fossil fuel car, a BEV battery is located underneath the passenger compartment, basically under the floor. The overall design complexity involves maximizing cell volume (range) into a given footprint (area/volume) provided by the car setup, to the lowest weight possible (range/environmental impact) while also maximizing highly important attributes such as crash safety and vehicle stiffness (NVH and driver experience).

Up until recently a battery electric vehicle pack has been as a standalone unit with main function of being a safety cage for cells and modules preventing intrusion causing catastrophic failure, while also protecting the sensitive electronics inside from the outside environment. This thinking has led to double structures; Battery and body of the vehicle. Having double structures with the necessary gaps to allow for tolerances and general occupies a volume that could have otherwise been used for integrating more cell volume, further increasing range, had the two systems been seen and engineered as one system. Current art is compensating for this lower volumetric efficiency by using a larger footprint, leading to a shorter stopping distance (in longitudinal and lateral direction) between frame structure and cell footprint. An increasing size of the vehicle results in in increased energy content.

The overall design complexity is dependent on how to maximize the cell volume (effectively range), given the footprint (area & volume) provided by the car set-up; on how to reach the lowest possible weight for reducing the environmental impact; on how to maximize the crashworthiness; and on how to lower the seat position in order to keep a low roof-line, thereby minimizing aerodynamic drag and energy consumption.

Up until now the main principle has been to stack members on top of the electric vehicle's battery unit. As a consequence, the cabin ergonomics is heavily compromised if a roof-line needs to be as low as in the ICE cars; one possible solution would be to lift the roof line but then there is a penalty on aerodynamic drag coefficient (closely linked to efficiency & range). What is desired is a vehicle design that can accommodate a battery unit installation without external members on top (cabin-side) combined with a body without side-spanning structures, capable of absorbing and mitigating side impact collision energy, as a system.

It is known to provide structural batteries in which the battery casing forms the bottom of the vehicle body and the traditional front floor is removed. The arrays of battery cells are kept in place inside the casing of the battery pack by means of a resin (Tesla WO 2021012340).

It is an object of the application to provide an electric vehicle having a battery pack having high volumetric efficiency and a low sill height and consequently having a relatively low roof line of the cabin. It is another object to provide an electric vehicle in which heavy side-spanning members overlying the battery pack can be reduced in size and volume and can preferably be omitted.

### Summary

**An** electric vehicle according to the disclosure comprises:
- a frame with two spaced-apart longitudinal members having an upper transversely oriented wall member that is situated a vertical distance Hu from a bottom plane and a lower transversely oriented wall member that is situated at or near the bottom plane, and
- a battery pack with an array of battery cells defining an array top surface, an array bottom surface and an array side surface, a casing top plate contacting the array top surface, a casing bottom plate contacting the cell bottom surface, and a casing side wall, connected to the top and bottom plates and contacting the array peripheral surface, the casing top plate being situated a vertical distance Hct from the bottom plane, that substantially corresponds with the distance Hu, the battery pack comprising a longitudinal impact absorption structure comprising the casing side wall and a deformable section extending outwardly from the side wall to a position near the adjacent longitudinal member and having a lower part, connected to the longitudinal member at a height near the lower wall member, and an upper part, connected to the longitudinal member near the upper wall member.

The top and bottom plates of the casing form shear planes that guide the forces on side impact in a lateral direction from the sill to the battery structure. The casing side wall carries the deformable section that contacts the sill at the perimeter of the battery pack. This provides a strong structural battery assembly wherein the side impact energy is effectively taken up by the battery casing and the battery cells, and heavy side-spanning structures are not required. This results in a reduced sill height and a reduced wind cord (door flange), providing improved cabin ergonomics and a roofline that is on level (or lower) compared to a legacy ICE vehicle.

The lower part of the deformable section may extend below the lower wall member of the longitudinal member and can be connected to the lower wall member via a bolt connection.

The upper part of the deformable section may extend below the upper wall of the member of the longitudinal member and may be connected to the upper wall via a bolt connection.

This provides a strong connection of the battery pack to the longitudinal members or sills that allows efficient assembly by positioning the integral battery pack between the longitudinal sill members of a pre-assembled frame structure.

In an embodiment, an upper part of the longitudinal members extends no higher than 10 cm, preferably no higher than 8.5 cm above the plane of the top plate. A total height from the bottom plane is lower than 30 cm, preferably lower than 25 cm. The low sill height, including wind cord, results in a low cabin roofline and favorable air resistance values, thereby increasing the range of the electric vehicle.

In an embodiment, no cross beams extend between the longitudinal members at the level of the top plate.

Because the structural battery pack formed by the battery cells and the casing is cable of absorbing the side impact forces, the side-spanning members may be omitted. A strong structural battery pack comprising adhesively connected battery modules is described in European patent application EP *** that was filed on the same date in the name of the applicant. A battery pack of improved strength comprising a battery cell support matrix forming accommodating cavities in which the battery cells are embedded, is described European patent application EP *** that was filed on the same date in the name of the applicant. Both applications are incorporated herein by reference. Seats can be attached directly into the battery unit (or via a small spacer) to minimal and highly optimized structures inside the battery, which are designed to withstand and pass essential durability and safety requirements, e.g. belt-pull.

The top plates, bottom plates and side plates may be adhesively connected to the array top, bottom and side surfaces, respectively for providing a strong bond of the battery casing to the battery cells and distribution of the side impact forces between the casing and the battery cells. In an embodiment according to the disclosure, the top plate, the bottom plate and side walls are adhesively connected to the array top surface, the array bottom surface and the array side surfaces, respectively.

### Brief Description of the Drawings

An embodiment of an electric vehicle having a battery pack assembly according to the application, will, by way of non-limiting example, be described in detail with reference to the accompanying drawings. In the drawings:
Fig. 1 shows a frame 1 of an electric vehicle according to the application,
Fig. 2 shows a frame in accordance with the prior art,
Fig. 3 shows the frame of fig. 1 with the battery pack connected to the side profiles,
Fig. 4 shows a transverse cross-sectional view of the frame of fig. 3 looking in a forward direction, and
Fig. 5 shows the distribution of the forces that act upon a side impact on the frame of fig. 4.

### Description of Embodiments

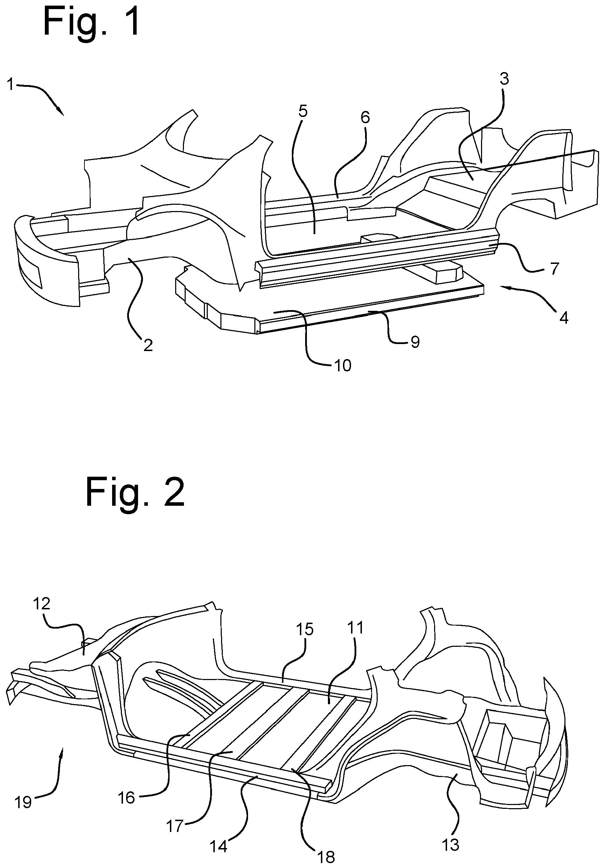

Figure 1 shows a frame 1 of an electric vehicle according to the application, comprising a front frame structure 2, a rear frame structure 3, including a rear floor, and a structural battery assembly 4 forming a bottom structure 5 of the vehicle. The structural battery assembly 4 comprises longitudinal sill profiles 6,7 that interconnect the front and rear frame structures 2,3 and that support a structural battery pack 9 of interconnected battery cells. The top plate 10 of the battery pack forms the bottom of the cabin of the vehicle.

Figure 2 shows a known frame 19 of an electric vehicle comprising a bottom plate 11 that is attached to a front frame structure 12 and to a rear frame structure 13. A battery pack is placed below the bottom plate 11. Two longitudinal sill members, or rockers, 14, 15 are interconnected by side-spanning members 16,17, 18 that are connected to the bottom plate 11 by spot welding or by mechanical fasteners.

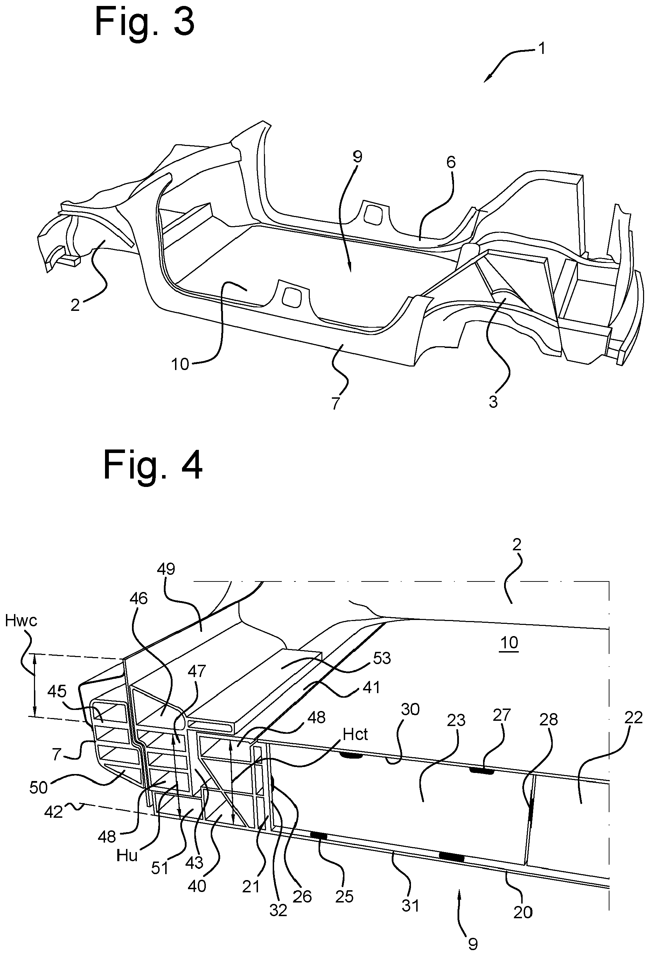

Figure 3 shows the frame 1 of fig. 1 according to the disclosure, with the battery pack 9 connected to the transverse members 6,7, that extend only a low height above the top plate 10 of the battery pack 9, forming a low sill structure.

Figure 4 shows the battery pack 9 with the top plate 10, the bottom plate 20 and the side wall 21 of the casing that encloses the battery cells 22,23. The battery cells 22,23 are placed in an array of for instance 4x 40 cells, and define an array top surface 30, an array bottom surface 31 and an array side surface 32. The surfaces 30-32 are connected via adhesive connection areas 25,26 and 27 to the bottom plate 20, to the side wall 21 and to the top wall 10 respectively. Adhesive areas 28 interconnect the battery cells 22,23.

The side wall 21 of the casing is connected to a longitudinal impact absorption structure 40 with an upper part 41 that is situated at a vertical distance H_{tc} of 15 cm above a bottom plane 42. The upper part 41 extends to a lateral position that is adjacent an inner surface 43 of the longitudinal sill profile 7. The upper part 45 of the sill profile 7 has a transversely extending reinforcement plate 46 that is situated at a height Hu above the bottom plane 42, that is about equal to the height H_{ct}. A further upper reinforcement plate 47 that is closer to the bottom plane 42, is situated at substantially the same height as an underlying reinforcement plate 48 of the impact absorption structure 40. The top of wind cord 49 that forms part of the longitudinal sill profile 7, extends a distance H_{wc} above the top plate 10 of about 8.5 cm.

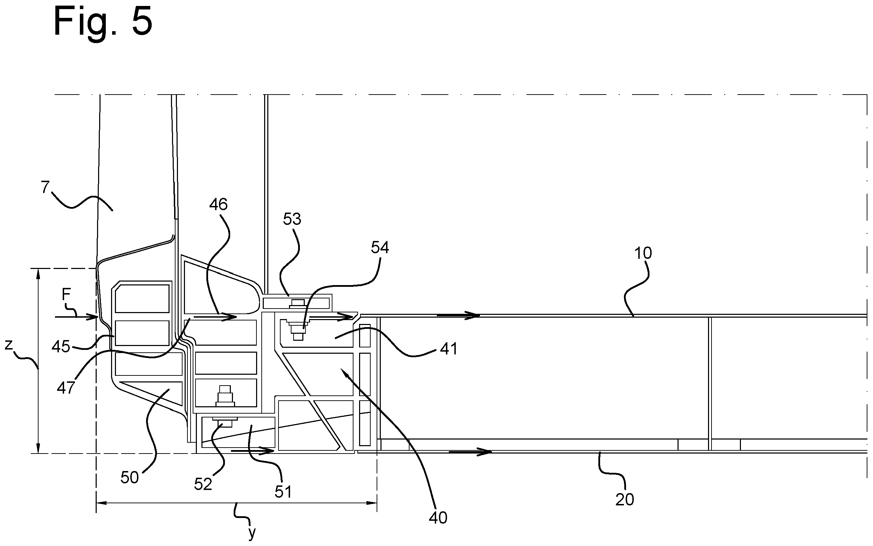

Figure 5 shows the upper part 53 of the sill profile 7 being connected to the upper part 41 of the impact absorption structure 40 via a bolt 54. The lower part 50 of the sill profile 7 is connected to a lower part 51 of the structure 40 via a bolt 52. The forces that act upon a side impact at the profile 7 are shown to be transferred via the upper reinforcement plate 46 of the sill profile 7 to the upper part 41 of the impact absorption structure 40 and from there to the top plate 10 of the battery casing. Forces are transferred from the lower part 50 of the sill profile 7 to the lower part 51 of the impact absorption structure 40 and from there on to the bottom plate 20. A height Z may be between 20 and 30 cm, for instance 22 cm, whereas a length Y may be between 20 and 30 cm, for instance 24 cm.

## Claims

1. Electric vehicle comprising:
- a frame (1) with two spaced-apart longitudinal members (6,7) having an upper transversely oriented wall member (46) that is situated a vertical distance Hu from a bottom plane (42) and a lower transversely oriented wall member (48) that is situated near the bottom plane (42), and
- a battery pack (9) with an array of battery cells (22,23) defining an array top surface (30), an array bottom surface (31) and an array side surface (32), a casing top plate (10) contacting the array top surface (30), a casing bottom plate (20) contacting the array bottom surface (31) and a casing side wall (21), connected to the top and bottom plates (10,20) and contacting the array side surface (32), the casing top plate (10) being situated a vertical distance Hct from the bottom plane (42) that substantially corresponds with the distance Hu, the battery pack (9) comprising a longitudinal impact absorption structure (40) comprising the casing side wall (21) and a reinforcement section (41,51) extending outwardly from the side wall (21) to a position near the adjacent longitudinal member (7) and having a lower part (51), connected to the longitudinal member (7) at a height near the lower wall member (50), and an upper part (41), connected to the longitudinal member (7) near the upper wall member (45,46).

2. Electric vehicle according to claim 1, wherein the lower part (51) of the reinforcement section (41,51) extends below the lower wall member (48) of the longitudinal member (7) and is connected to the lower wall member (48) via a bolt connection (52).

3. Electric vehicle according to claim 1 or 2, wherein the upper part (41) of the reinforcement section (41,51) extends below an upper wall (53) of the longitudinal member (7) and is connected to the upper wall (53) via a bolt connection (54).

4. Electric vehicle according to claim any of the preceding claims, wherein an upper part (49) of the longitudinal members (6,7) extends a distance H_{wc} above the plane of the top plate (10) that is not higher than 10 cm.

5. Electric vehicle according to claim 4, no cross beams extend between the longitudinal members (6,7) at the level of the top plate (10).

6. Electric vehicle according to any of the preceding claims, the top plate (10), bottom plate (20) and side walls (21) being adhesively connected to the array top surface (30), the array bottom surface (31) and the array side surfaces (32), respectively.

7. Battery pack (9) comprising an array of battery cells (22,23) defining an array top surface (30), an array bottom surface (31) and an array side surface (32), a casing top plate (10) contacting the array top surface (30), a casing bottom plate (20) defining a bottom plane (42) and contacting the array bottom surface (31), and a casing side wall (21), connected to the top and bottom plates (10,20) and contacting the array side surface (32), the battery pack (9) comprising a longitudinal impact absorption structure (40) comprising the casing side wall (21) and a reinforcement section (41,51) extending outwardly from the side wall (21) and having a lower part (51) with a connection member (52) for connecting to a longitudinal sill member (7) at a height near the bottom plane (42), and an upper part (41) with a connection member (54) that is adapted to be connected to a longitudinal sill member (7) near the top plate (10).
